Europäisches Patentamt

European Patent Office

Office européen des brevets

(19)

(11) Publication number: **0 100 381**
**B1**

(12) **EUROPEAN PATENT SPECIFICATION**

(45) Date of publication of patent specification: **17.09.86**

(21) Application number: **82304053.0**

(22) Date of filing: **30.07.82**

(51) Int. Cl.⁴: **C 08 F 220/28, B 29 D 11/02**

(54) **Soft contact lens.**

(43) Date of publication of application:
**15.02.84 Bulletin 84/07**

(45) Publication of the grant of the patent:
**17.09.86 Bulletin 86/38**

(84) Designated Contracting States:
**CH DE FR GB IT LI NL**

(56) References cited:
**US-A-3 654 244
US-A-3 808 179
US-A-3 988 274
US-A-4 130 706**

(73) Proprietor: **HOYA CORPORATION**
**7-5 Nakaochiai 2-chome**
**Shinjuku-ku Tokyo (JP)**

(72) Inventor: **Yokoyama, Yuichi**
**15-18 Kamiochiai-2-chome**
**Shinjuku-ku Tokyo (JP)**
Inventor: **Masuhara, Eiichi**
**5-10 Honkomagome-2-chome**
**Bunyko-ku Toyko (JP)**
Inventor: **Kadoma, Yoshinori**
**4-2-504, Inagekaigan-1-chome**
**Chiba-shi (JP)**
Inventor: **Tarumi, Niro**
**280-27-302, Haijimacho**
**Akishima-shi (JP)**
Inventor: **Tsuchiya, Makoto**
**132-1, Otsu, Sekimachi-1-chome**
**Nerima-ku Tokyo (JP)**

(74) Representative: **Carter, Caroline Ann et al**
**ABEL & IMRAY Northumberland House 303-306**
**High Holborn**
**London WC1V 7LH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# 0 100 381

**Description**

This invention relates to a soft contact lens. The soft contact lens of the invention is prepared from a monomer mixture preferably containing trifluoroethyl methacrylate and/or hexafluoroisopropyl methacrylate and when used, is difficult to be deposited with tears or the like. The invention makes it possible to provide a soft contact lens having excellent mechanical strength and elasticity which can sufficiently stably retain its lens shape even when processed into a thin lens.

In recent years, soft contact lenses (hereinafter abbreviated as "soft lenses") have come to be widely used in place of conventional hard contact lenses because of their comfort of wearing. Most soft lenses are composed mainly of 2-hydroxyethyl methacrylate (HEMA) or N-vinylpyrrolidone (NVP), and have a water content of as a wide range as from about 20 to 85%. Soft lenses vary in physical properties such as mechanical strength, refractive index, oxygen permeability, specific gravity and the like depending on the water content of the materials. In general, with increase in the water content, the oxygen permeability increases, but the mechanical strength decreases. Further the refractive index and the specific gravity decrease and approach the value of water.

Since the materials for soft lenses are high in affinity for tears, the surfaces of the lenses are well wetted. Consequently, while soft lenses are used, resistance to soft lenses on the epithelium of a cornea and on the inner surface of an eyelid is reduced, so wearers of soft lenses are relieved of discomfort due to the lenses as foreign bodies. Further, soft lenses permit, to a certain extent, the supply of oxygen to a cornea epithelium through their own materials, and hence have a function of relieving want of oxygen in a cornea to some degree.

Increase in the water content of soft lenses leads to improvement of the wettability and oxygen permeability through the lenses, but results in lowering of the mechanical strength of the materials, so that the lenses get easier to break while handled. As another method for supplying more oxygen to a cornea, there is a method by which soft lenses are made more thinner. This method is advantageous in that wearers of soft lenses are relieved of uncomfortableness due to the lenses as foreign bodies. However, according to this method, the front side and the back side of the lenses are difficult to distinguish from each other when the lenses are handled, and the lenses are folded in two and the two halves adhere to each other when the lenses are handled, so that the lenses are very inconvenient when attached to eyes.

As a general problem in soft lenses, there is a problem of contamination on the lenses. Contamination on soft lenses is due to the adhesion of proteins, lipids, mucoids and the like in tears; the denaturation, precipitation and adhesion thereof by boiling; and the adhesion of proteins, lipids and the like from fingers during handling of the lenses. The lenses stained therewith show white turbidity, color change to yellow and the like. Further, when the precipitated and adhered matters form a layer, the layer of these matters is cracked, so that the surface of the lenses becomes uneven. Consequently, the surface of the lenses becomes water-repellent and is lowered in oxygen permeability, so that the comfortableness to wearing deteriorates. Further, the formation of said layer facilitates propagation of fungi, bacteria and the like. When soft lenses are seriously deposited, the effect of improving visual acuity by the lenses is greatly lessened and the discomfort due to the lenses as foreign bodies becomes very serious. The lenses sometimes become unusable. Further, the lenses sometimes cause cornea disease of their wearers and hence contamination is a serious problem in soft lenses. As one mode of the employment of a soft lens, there is sometimes made an attempt to provide for continuous wear, a soft lens having a high water content for a patient after a cataract operation. However, in this case, since a material having a high water content is used, a tear composition is apt to penetrate into the material, and the lens is liable to be contaminated because it cannot be washed everyday, which causes shortening of life of the lens.

When contamination of soft lenses is caused by a tear composition, the contamination of the lenses varies depending upon the difference in composition of tears among wearers, but, in general, there is strong suspicion of the origin against proteins, particularly lysozyme present in tears. Further, mucoids, lipids and the like appear to adhere to the lysozymes complexly.

As a treatment for contamination on soft lenses, there are now used a washing treatment with a cleaner and a treatment with an enzymatic agent, however, in a sense, these are only passive countermeasures for removing deposits. Further, these treatments sometimes cause deposits on the lenses when the subsequent washing is insufficient.

In consideration of these facts, the present inventors have devoted themselves to studies to succeed in imparting deposit resistance to a material itself for a soft lens without deteriorating its physical properties, and to finding a soft lens that retains its lens shape sufficiently even when its thickness is small, and is convenient for handling, whereby this invention has been accomplished.

That is to say, an object of this invention is to provide a soft lens to which proteins, lipids, mucoids and the like from tears and the like hardly adhere.

Another object of this invention is to provide a soft lens which retains its lens shape sufficiently even when its thickness is small.

The present invention provides a soft contact lens comprising a copolymer obtained by polymerizing a composition comprising (A) at least 50% by weight of at least one monomethacrylate of an alkylene glycol, (B) 5 to 35% by weight of at least one fluorine-containing methacrylic ester wherein the ester moiety contains up to 4 carbon atoms and (C) less than 40% by weight of one or more compounds selected from

2

# 0 100 381

the group consisting of an unsaturated carboxylic acid having one or more carboxyl groups in the molecule, a monomethacrylate of a polyhydric alcohol having three or more hydroxyl groups, and an alkyl methacrylate, the percentages of (A), (B) and (C) being calculated on the basis of the total weight of (A)+(B)+(C), and the sum of the percentages of (A)+(B)+(C) being 100%.

The fluorine-containing methacrylic ester is advantageously a fluorine-containing alkyl ester wherein the alkyl group contains at least one terminal $-CF_3$ group. Trifluoroethyl methacrylate (hereinafter abbreviated as "TFEM"), wherein the trifluoroethyl group has the formula $-CH_2CF_3$, and/or hexafluoro-isopropyl methacrylate (hereinafter abbreviated as "HFIPM"), wherein the hexafluoroisopropyl group has the formula $-CH(CF_3)_2$, are preferably used as the fluorine-containing methacrylic ester, and the invention is thus primarily discussed in terms of these compounds. Other fluorine-containing methacrylic esters which may be used include pentafluoro-n-propyl methacrylate, wherein the pentafluoro propyl group has the formula $-CH_2CF_2CF_3$, and pentafluoro-n-butyl methacrylate, wherein the pentafluoro-n-butyl group has the formula $-CH_2CH_2CF_2CF_3$.

The composition used in accordance with the invention contains at least 50% by weight of component (A), based on the total weight of (A)+(B)+(C). The amount of component (A) should not exceed 95% by weight. Component (C) must be present; that is the proportion of component (C) cannot be zero.

The soft contact lens of the invention is preferably obtained by subjecting to casting polymerization by a continuous and/or stepwise temperature raising method a composition as specified above, mechanically processing and polishing the resulting polymer to give thereto a lens shape, and then hydrating and swelling the polymer. A continuous and/or stepwise temperature raising method of from 35°C to 110°C is preferably used.

Advantageously the soft lens of this invention is obtained by subjecting, to casting polymerization by a continuous or stepwise temperature-raising method from 35°C to 110°C, a composition comprising 50 to 95% by weight of a monomethacrylate of an alkylene glycol, 5 to 35% by weight of trifluoroethyl methacrylate (hereinafter abbreviated as "TFEM") and/or hexafluoroisopropyl methacrylate (hereinafter abbreviated as "HFIPM"), and less than 40% by weight of one or more compounds selected from the group consisting of an unsaturated carboxylic acid having one or more carboxyl groups in the molecule, a monomethacrylate of a polyhydric alcohol having three or more hydroxyl groups, and an alkyl methacrylate; finishing the resulting polymer by mechanical processing and polishing to give thereto a lens shape; and then subjecting it to a hydration and swelling treatment involving an alkali treatment.

Since at least one fluorine-containing monomer such as TFEM or HFIPM is used in the soft lens of this invention, foreign matters adhere hardly to the surface of the soft lens, so that the soft lens is greatly reduced in color change to yellow and in white turbidity as compared with conventional soft lenses. Further, the lens can sufficiently retain its normal lens shape even when processed so as to be thin, which is also a new property obtained by the addition of at least one fluorine-containing monomer such as TFEM and HFIPM.

The copolymerisation of fluorocarbon acrylates or methacrylates with acrylates or methacrylates which contain one or more alkyleneoxy groups is known from US Patent Specification No. 3 654 244. In that specification the polymers thus obtained are applied to fibrous materials to provide soil repellency and soil releasability. In U.S. Specification No. 3 654 244 however, there is no disclosure of the copolymerisation of fluorocarbon acrylates or methacrylates with a monomethacrylate of an alkylene glycol.

The production of a soft lens by use of a fluorine-containing acrylic or methacrylic ester has conventionally been known (Louis Plambeck Jr.; Japanese Patent Appln. Kokai (Laid-Open) 29,660/1978, U.S. Patent 4130706); however this process uses a fluorine-containing ester whose ester moiety is a straight chain having 5 or more carbon atoms and uses no fluorine-containing ester whose ester moiety is short, for example with less than 5 carbon atoms, such as TFEM and HFIPM used in this invention. It has been confirmed that a hydroxyl group-containing monomer and the fluorine-containing monomer used in the above-mentioned patent are poor in miscibility with each other and give only an opaque polymer by usual bulk polymerization, however TFEM and HFIPM used in this invention can give a transparent polymer and lens without causing white turbidity and opaqueness, by bulk polymerization with the hydroxyl group containing monomer, which is a novel finding by present inventors. Further, unlike this invention, the above-mentioned patent does not aim at obtaining a deposit-resistant soft lens. When at least one fluorine-containing monomer such as TFEM, HFIPM or the like is used as a copolymer component in this invention, a soft lens good in shape stability, elasticity and mechanical strength can be obtained even when the thickness of the lens is small. Therefore, there could be obtained an ideal soft lens which advantageously supplies oxygen to the cornea of a lenswearer and gives only slight discomfort due to the lens as a foreign body.

It has become clear that as compared with conventional soft lenses containing no fluorine, the soft lens of this invention is reduced in deposit with proteins, lipids and mucoids. In particular, deposit with protein was measured by use of lysozyme labeled with [125]I to show a significant difference in adsorption of the lysozyme between the soft lens containing at least one fluorine-containing monomer of this invention and a soft lens containing no fluorine and having the same water content as that of the soft lens of this invention.

Further, even when the thickness of the lens of this invention was adjusted so as to be one-third of the conventional thickness (about 0.05 mm in central thickness), the lens retained its shape, and such a

3

phenomenon that a piece of lens gets folded into two and stuck was not observed, and the lens could be handled without inconvenience. This was an unexpected result, and was the discovery of a novel effect brought about by the employment of at least one fluorine-containing monomer.

The fluorine-containing monomer is used in an amount of 5 to 35% by weight. TFEM and HFIPM can be used alone or simultaneously. However, when the added amount of the fluorine-containing monomer is less than 5% by weight, the effect of the monomer on antideposit is insufficient, and with increase of the added amount, the effect on antideposit is heightened, but the elasticity of the resulting soft lens is reduced. When the added amount exceeds 35% by weight, elasticity required of a soft lens becomes unobtainable. Preferably, an amount of 10 to 20% by weight is employed.

The monomethacrylate of an alkylene glycol is monomethacrylate of, for example, ethylene glycol, propylene glycol, diethylene glycol, tetraethylene glycol or a polyethylene glycol, and is the main constituent of the soft lens of this invention. As the monomethacrylate, ethylene glycol monomethacrylate, i.e., 2-hydroxyethyl methacrylate (2-HEMA) is preferably used. Simultaneous use of 2-hydroxyethyl methacrylate and propylene glycol monomethacrylate is also preferred.

Representative examples of the unsaturated carboxylic acids having one or more carboxyl groups in one molecule include acrylic acid, methacrylic acid, itaconic acid and the like, and the unsaturated carboxylic acid is a constituent for increasing the water content by a hydration and swelling treatment involving an alkali treatment and imparting elasticity required for a soft lens. As the unsaturated carboxylic acid, methacrylic acid is particularly preferred.

As the monomethacrylate of a polyhydric alcohol having three or more hydroxyl groups, glyceryl methacrylate or monomethacrylate of pentaerythritol is preferably used, and this constituent contributes to the increase of the water content and the elasticity.

The preferred alkyl methacrylate is the methyl, ethyl, n-propyl or n-butyl ester of methacrylic acid, and is a constituent for improving the strength, processability and shape stability of the resulting soft lens.

In addition to these constituents, there may be used, as cross linking agents, polyfunctional monomers such for example as ethylene glycol dimethacrylate, diethylene glycol dimethacrylate, triethylene glycol dimethacrylate, tetraethylene glycol dimethacrylate, butylene glycol dimethacrylate, neopentyl glycol dimethacrylate, propylene glycol dimethacrylate, diethylene glycol bisallylcarbonate, trimethylolpropane trimethacrylate, bisphenol A dimethacrylate, methylenebisacrylamide, and the like. N-vinylpyrrolidone, acrylamide, methacrylamide or the like may be used as a constituent for increasing the water content.

As the polymerization initiator, there may be used any suitable for example conventional, radical-generating agents, for example, benzoyl peroxide, lauroyl peroxide, cumene hydroperoxide, di-tert-butyl peroxide, bis-4-tert-butylcyclohexyl peroxydicarbonate, diisopropyl peroxydicarbonate azobisisobutyronitrile, azobisisovaleronitrile and the like, and initiators generating a radical at low temperatures are more preferable.

In a preferred method for making the lenses of this invention, the desired constituents are mixed and then poured into a mold made of a metal, glass or plastics, after which, in such a condition that the resulting mixture is hermetically sealed, polymerization is completed in an electric furnace by a continuous-temperature-raising method of from 35° to 110°C. After completion of the polymerization, the resulting polymer is taken out of the mold and finished by usual mechanical processing and finishing to give thereto a lens shape. In order to hydrate and swell the finished lens, the lens is immersed in a physiological saline containing sodium carbonate, sodium hydrogencarbonate, potassium hydrogen-carbonate, and/or the like, at room temperature or with heating, and then immersed in a physiological salt solution and allowed to stand at room temperature or heated while the physiological salt solution is renewed several times, to be hydrated and swollen.

The thus produced soft lens has the same optical properties and elasticity as those of conventional soft lenses, and has such an effect of the addition of at least one fluorine-containing monomer that it is less susceptible to adhesion of deposit due to proteins, lipids and mucoids than conventional soft lenses. Further, a soft lens retaining a lens shape sufficiently stably could be obtained even when the thickness of the soft lens was small.

This invention is further explained below in more detail referring to Examples and Comparative Examples, which are not by way of limitation but by way of illustration. In Examples and Comparative Examples, parts are by weight.

Example 1

To a mixture of 89.7 parts of 2-hydroxyethyl methacrylate, 10 parts of TFEM and 0.3 part of methacrylic acid was added 0.1 part of azobisisobutyronitrile as a polymerization initiator, and the resulting mixture was sufficiently stirred and mixed, poured into a mold made of plastics, and then hermetically sealed up therein. The mixture was then subjected to polymerization in a continuous-temperature-raising furnace of from 35° to 110°C, and the resulting transparent polymer was processed by cutting and polishing to give thereto a lens shape. The thus obtained lens was treated in a physiological saline containing 1.2% of sodium hydrogen-carbonate at 80° to 90°C for 1 hour and then in a physiological salt solution at 80° to 90°C for 1 hour, whereby the lens was allowed to absorb water and swell and at the same time, the unpolymerized monomer was eluted from the lens. The thus obtained soft lens had a water content of 35% and a tensile strength of about 850 g/mm$^2$, was comfortable to wear and, as shown in Table 1, adsorbed only very small amount of protein (lysozyme) as compared with a conventional soft lens having the same water content, though it was equal in optical properties to the conventional soft lens. Further, the soft lens, even when its thickness was made smaller, had the same shape stability as did those having a conventional thickness.

Example 2

To a mixture of 84 parts of 2-hydroxyethyl methacrylate, 15 parts of TFEM and 1 part of methacrylic acid was added 0.1 part of diisopropyl peroxydicarbonate, and the same procedure as described in Example 1 was followed to obtain a soft lens having a water content of 36%. As shown in Table 1, this lens adsorbed only very small amount of the protein as compared with the conventional soft lens having the same water content and containing no fluorine compound.

Example 3

To a mixture of 70 parts of 2-hydroxyethyl methacrylate, 10 parts of TFEM and 20 parts of glyceryl methacrylate was added 0.1 part of bis-4-tert-butyl-cyclohexyl peroxydicarbonate, and polymerization and lens processing were carried out in the same manner as in Example 1, after which the thus obtained lens was treated in a physiological salt solution at 80° to 90°C for 2 hours to produce a soft lens having a water content of 36%. This soft lens had excellent resistance to deposit.

Examples 4 to 14

Soft lenses having various compositions and water contents were produced by the same technique as in Examples 1 to 3. All the soft lenses were colorless and transparent, had the same optical properties, mechanical processability and strength as conventional soft lenses, and were less susceptible to deposit with proteins. The soft lenses had good shape stability even when they were thin.

Comparative Examples 1 to 4

By the same technique as in Examples 1 to 3, soft lenses were produced from individual polymers having various compositions containing no fluorine-containing monomer, and were used as controls.

Each of the soft lenses obtained in the above Examples and Comparative Examples was immersed in a solution of egg white lysozyme labeled with ratioactive iodine ($^{125}$I) (concentration 500 µg/ml; pH 7.3; 0.05 M borate buffer), and taken out of the solution after 2.5 hours, 24 hours, 3 days and 10 days, and the lens surface was washed with flowing water. Thereafter, the amount of egg white lysozyme adhered to the lens was measured by a method by which γ-rays were detected by means of a well-type scintillation counter. As shown in Tables 1 to 4, the amounts of lysozyme adhered to the lenses of the comparative examples 1 to 4 containing no fluorine-containing monomer as a copolymer component are taken as 100%, and those in the examples are shown in comparison therewith.

The shape stability is expressed by ⊚, ◯, Δ or x (explained below) based on the observation of the elasticity, ability to restore the original shape during handling, and shape stability during handling of a thin lens (central thickness: 0.05 mm). The tensile strength is expressed in terms of g/mm².

⊚: Greatly excellent shape stability and elasticity
◯: Excellent shape stability and elasticity
Δ: A little inferior shape stability and elasticity
x: Inferior shape stability and elasticity

TABLE 1

| Sample | Composition (parts by weight) | Water content | Adsorbed amount ratio | | | | Shape stability tensile strength |
| --- | --- | --- | --- | --- | --- | --- | --- |
| | | | Immersion for 2.5 hs | Immersion for 24 hs | Immersion for 3 days | Immersion for 10 days | |
| Comparative Example 1 | HEMA/EDMA (99/1) | 35% | 100% | 100% | 100% | 100% | Δ 250 |
| Example 1 | HEMA/TFEM/MA (89.7/10/0.3) | 35% | 84 | 65 | 57 | 60 | ◉ 850 |
| Example 2 | HEMA/TFEM/MA (84/15/1) | 36% | 78 | 73 | 79 | 75 | ◉ 910 |
| Example 3 | HEMA/TFEM/GMA (70/10/20) | 36% | 54 | 51 | 58 | 57 | ○ |
| Example 4 | HEMA/TFEM/MA/MMA (84/10/1/5) | 40% | 81 | 68 | 83 | 85 | ◉ 630 |
| Example 5 | HEMA/TFEM/GMA/MMA (65/10/20/5) | 38% | 67 | 62 | 71 | 68 | ◡ |
| Example 6 | HEMA/HFIPM/MA (94/5/1) | 35% | 72 | 67 | 73 | 59 | ◉ 840 |
| Example 7 | HEMA/HFIPM/GMA (60/10/30) | 36% | 53 | 48 | 56 | 61 | ○ |
| Example 8 | HEMA/TFEM/MA/EDMA (88/10/1/1) | 33% | 70 | 62 | 65 | 71 | ◉ 950 |

TABLE 2

| Sample | Composition (parts by weight) | Water content | Adsorbed amount ratio | | | | Shape stability tensile strength |
| --- | --- | --- | --- | --- | --- | --- | --- |
| | | | Immersion for 2.5 hs | Immersion for 24 hs | Immersion for 3 days | Immersion for 10 days | |
| Comparative Example 2 | HEMA/MMA/EMA/MA (79/10/10/1) | 40% | 100% | 100% | 100% | 100% | Δ 430 |
| Example 4 | HEMA/TFEM/MMA/MA (84/10/5/1) | 40 | 36 | 60 | 56 | 51 | ◉ 630 |
| Example 9 | HEMA/HFIPM/MMA/MA (73.5/15/10/1.5) | 41 | 32 | 49 | 62 | 47 | ◉ 650 |
| Example 10 | HEMA/GMA/TFEM (60/30/10) | 42 | 33 | 41 | 53 | 42 | ○ 370 |

TABLE 3

| Sample | Composition (parts by weight) | Water con-tent | Adsorbed amount ratio | | | | Shape stabi-lity tensile strength |
|---|---|---|---|---|---|---|---|
| | | | Immer-sion for 2.5 hs | Immer-sion for 24 hs | Immer-sion for 3 days | Immer-sion for 10 days | |
| Comparative Example 3 | HEMA/MMA/MA (80/15/5) | 60% | 100% | 100% | 100% | 100% | △ 210 |
| Example 11 | HEMA/TFEM/MMA/MA (64.8/20/10/5.2) | 60 | 39 | 48 | 50 | 39 | ⊙ 440 |
| Example 12 | HEMA/TFEM/MA (76/20/4) | 60 | 35 | 46 | 62 | 45 | ◯ 400 |
| Example 13 | HEMA/HFIPM/MA/MMA (69.7/15/5.3/10) | 60 | 38 | 53 | 61 | 57 | △ — |

TABLE 4

| Sample | Composition parts by weight | Water con-tent | Adsorbed amount ratio | | | | Shape stabi-lity tensile strength |
|---|---|---|---|---|---|---|---|
| | | | Immer-sion for 2.5 hs | Immer-sion for 24 hs | Immer-sion for 3 days | Immer-sion for 10 days | |
| Comparative Example 4 | Polymer containing no fluorine containing monomer | 72% | 100% | 100% | 100% | 100% | x 160 |
| Example 14 | HEMA/TFEM/MMA/MA/HPMA/4G (53/20/10/11/5/1) | 72 | 44 | 58 | 71 | 70 | ◯ 300 |

Abbreviation:
HEMA  2-hydroxyethyl methacrylate
TFEM  trifluoroethyl methacrylate
HFIPM  hexafluoroisopropyl methacrylate

MA  methacrylic acid
GMA  glyceryl methacrylate
MMA  methyl methacrylate

EDMA  ethylene glycol dimethacrylate
EMA  ethyl methacrylate
4G  tetraethylene glycol dimethacrylate
HPMA  2-hydroxypropyl methacrylate
n-BMA  n-butyl methacrylate

When trifluoroethyl methacrylate and/or hexafluoroisopropyl methacrylate, which are fluorine-containing monomers, are included in a monomer mixture for producing a soft contact lens, the resulting soft contact lens has the same optical properties and elasticity as conventional soft contact lenses, and is very superior to the conventional ones in resistance to deposit and in shape stability.

**Claims**

1. A soft contact lens comprising a copolymer obtained by polymerizing a composition comprising (A) at least 50% by weight of at least one monomethacrylate of an alkylene glycol, (B) 5 to 35% by weight of at least one fluorine-containing methacrylic ester wherein the ester moiety contains up to 4 carbon atoms and (C) less than 40% by weight of one or more compounds selected from the group consisting of an unsaturated carboxylic acid having one or more carboxyl groups in the molecule, a monomethacrylate of a polyhydric alcohol having three or more hydroxyl groups, and an alkyl methacrylate, the percentages of (A), (B) and (C) being calculated on the basis of the total weight of (A)+(B)+(C), and the sum of the percentages of (A)+(B)+(C) being 100%.

2. A soft contact lens according to Claim 1, wherein the monomethacrylate of an alkylene glycol is monomethacrylate of ethylene glycol, propylene glycol, diethylene glycol, tetraethylene glycol or a polyethylene glycol $[HO(CH_2CH_2O)_nH$, n=5 to 20].

3. A soft contact lens according to Claim 1 or 2, wherein the unsaturated carboxylic acid having one or more carboxylic groups in the molecule is selected from the group consisting of acrylic acid, methacrylic acid and itaconic acid.

4. A soft contact lens according to any of Claims 1 to 3, wherein the monomethacrylate of a polyhydric alcohol having three or more hydroxyl groups is glyceryl methacrylate or monomethacrylate of pentaerythritol.

5. A soft contact lens according to any of Claims 1 to 4, wherein the alkyl methacrylate is selected from the group consisting of methyl, ethyl, n-propyl and n-butyl esters of methacrylic acid.

6. A soft contact lens according to any of Claims 1 to 5, wherein the unsaturated carboxylic acid having one or more carboxyl groups in the molecule is used in an amount of 10% by weight or less.

7. A soft contact lens according to any of Claims 1 to 6, wherein the monomethacrylate of a polyhydric alcohol having three or more hydroxyl groups is used in an amount of 30% by weight or less.

8. A soft contact lens according to any of Claims 1 to 7, wherein the alkylmethacrylate is used in an amount of 20% by weight or less.

9. A soft contact lens as claimed in any one of claims 1 to 8, wherein the fluorine-containing methacrylic ester is a fluorine-containing alkyl ester wherein the alkyl group contains at least one terminal $-CF_3$ group.

10. A soft contact lens as claimed in any one of claims 1 to 9, wherein the fluorine-containing methacrylic ester, or one of the said esters, is trifluoroethylmethacrylate.

11. A soft contact lens as claimed in any one of claims 1 to 10, wherein the fluorine-containing methacrylic ester, or one of the said esters, is hexafluoroisopropyl methacrylate.

12. A soft contact lens obtained by subjecting to casting polymerization by a continuous and/or stepwise temperature raising method a composition as specified in any one of claims 1 to 11, mechanically processing and polishing the resulting polymer to give thereto a lens shape, and then hydrating and swelling the polymer.

13. A soft contact lens as claimed in claim 12, wherein a continuous and/or stepwise temperature raising method of from 35°C to 110°C is used.

14. A soft contact lens obtained by subjecting, to casting polymerization by a continuous-temperature-raising method of from 35° to 110°C, a composition comprising 50 to 95% by weight of a monomethacrylate of an alkylene glycol, 5 to 35% by weight of trifluoroethyl methacrylate and/or hexafluoroisopropyl methacrylate, and less than 40% by weight of one or more compound selected from the group consisting of an unsaturated carboxylic acid having one or more carboxyl groups in the molecule, a monomethacrylate of a polyhydric alcohol having three or more hydroxyl groups, and an alkyl methacrylate; mechanically processing and polishing the resulting polymer to give thereto a lens shape; and then hydrating and swelling the polymer.

## Patentansprüche

1. Weichkontaktlinse aus einem durch Polymerisieren einer Masse aus (A) mindestens 50 Gew.-% mindestens eines Monomethacrylats eines Alkylenglykols, (B) 5—35 Gew.-% mindestens eines fluorhaltigen Methacrylsäureesters mit bis zu 4 Kohlenstoffatomen in der Estereinheit und (C) weniger als 40 Gew.-% einer oder mehrerer Verbindung(en), ausgewählt aus der Gruppe "ungesättigte Carbonsäure mit einer oder mehreren Carboxylgruppe(n) im Molekül, Monomethacrylat eines mehrwertigen Alkohols mit drei oder mehr Hydroxylgruppen und Alkylmethacrylat" erhaltenen Mischpolymerisat, wobei die Prozentanteile (A), (B) und (C) auf der Grundlage des Gesamtgewichts (A)+(B)+(C) errechnet ist und die Summe der Prozentanteile (A)+(B)+(C) 100% beträgt.

2. Weichkontaktlinse nach Anspruch 1, dadurch gekennzeichnet, daß das Monomethacrylat eines Alkylenglykols das Monomethacrylat von Ethylenglykol, Propylenglykol, Diethylenglykol, Tetraethylenglykol oder eines Polyethyleneglykols $[HO(CH_2CH_2O)_nH$, n=5—20] ist.

3. Weichkontaktlinse nach Ansprüchen 1 oder 2, dadurch gekennzeichnet, daß die ungesättigte Carbonsäure mit einer oder mehreren Carboxylgruppe(n) im Molekül aus der Gruppe "Acrylsäure, Methacrylsäure und Itaconsäure" ausgewählt ist.

4. Weichkontaktlinse nach einem der Ansprüche 1 bis 3, dadurch gekennzeichnet, daß das Monomethacrylat eines mehrwertigen Alkohols mit drei oder mehr Hydroxylgruppen aus Glycerylmethacrylat oder dem Monomethacrylat von Pentaerythrit besteht.

5. Weichkontaktlinse nach einem der Ansprüche 1 bis 4, dadurch gekennzeichnet, daß das Alkylmethacrylat aus der Gruppe "Methyl-, Ethyl-, n-Propyl- und n-Butylester der Methacrylsäure" ausgewählt ist.

6. Weichkontaktlinse nach einem der Ansprüche 1 bis 5, dadurch gekennzeichnet, daß die ungesättigte Carbonsäure mit einer oder mehreren Carboxylgruppe(n) im Molekül in einer Menge von 10 Gew.-% oder weniger zum Einsatz gelangt.

7. Weichkontaktlinse nach einem der Ansprüche 1 bis 6, dadurch gekennzeichnet, daß das Monomethacrylat eines mehrwertigen Alkohols mit drei oder mehr Hydroxylgruppen in einer Menge von 30 Gew.-% oder weniger zum Einsatz gelangt.

8. Weichkontaktlinse nach einem der Ansprüche 1 bis 7, dadurch gekennzeichnet, daß das Alkylmethacrylat in einer Menge von 20 Gew.-% oder weniger zum Einsatz gelangt.

9. Weichkontaktlinse nach einem der Ansprüche 1 bis 8, dadurch gekennzeichnet, daß der fluorhaltige Methacrylsäureester aus einem fluorhaltigen Alkylester mit mindestens einer endständigen —$CF_3$-Gruppe im Alkylteil besteht.

10. Weichkontaktlinse nach einem der Ansprüche 1 bis 9, dadurch gekennzeichnet, daß der fluorhaltige Methacrylsäureester oder einer dieser Ester aus Trifluorethylmethacrylat besteht.

11. Weichkontaktlinse nach einem der Ansprüche 1 bis 10, dadurch gekennzeichnet, daß der fluorhaltige Methacrylsäureester oder einer dieser Ester aus Hexafluorisopropylmethacrylat besteht.

12. Weichkontaktlinse, hergestellt durch Gußpolymerisation (unter kontinuierlicher und/oder stufenweiser Temperaturerhöhung) einer Masse nach einem der Ansprüche 1 bis 11, mechanisches Bearbeiten und Polieren des erhaltenen Polymerisats unter Ausbildung einer Linsenform und abschließendes Hydratisieren und Quellen des Polymerisats.

13. Weichkontaktlinse nach Anspruch 12, dadurch gekennzeichnet, daß eine kontinuierliche und/oder stufenweise Temperaturerhöhung von 35—110°C erfolgt.

14. Weichkontaktlinse, erhalten durch Gußpolymerisation (unter kontinuierlicher Temperaturerhöhung von 35—110°C) einer Masse aus 50—95 Gew.-% eines Monomethacrylats eines Alkylenglykols, 5—35 Gew.-% Trifluorethylmethacrylat und/oder Hexafluorisopropylmethacrylat und weniger als 40 Gew.-% einer oder mehrerer Verbindung(en), ausgewählt aus der Gruppe "ungesättigte Carbonsäure mit einer oder mehreren Carboxylgruppe(n) im Molekül, Monomethacrylat eines mehrwertigen Alkohols mit drei oder mehr Hydroxylgruppen und Alkylmethacrylat", mechanisches Bearbeiten und Polieren des erhaltenen Polymerisats unter Ausbildung einer Linsenform und abschließendes Hydratisieren und Quellen des Polymerisats.

## Revendications

1. Lentille de contact souple comprenant un copolymère obtenu en polymérisant une composition comprenant (A) au moins 50% en poids d'au moins un monométhacrylate d'un alkylène glycole, (B) 5 à 35% en poids d'au moins un ester méthacrylique fluoré dans lequel la partie ester contient jusqu'à 4 atomes de carbone et (C) au moins 40% en poids d'un ou plusieurs composés choisis parmi un acide carboxylique insaturé ayant un ou plusieurs groupes carboxyle dans sa molécule, un monométhacrylate d'un polyalcool ayant trois groupes hydroxyle ou davantage, et un méthacrylate d'alkyle, les pourcentages de (A), (B) et (C) étant calculés sur la base du poids total de (A)+(B)+(C), et la somme des pourcentages de (A)+(B)+(C) étant de 100%.

2. Lentille de contact souple suivant la revendication 1, dans laquelle le monométhacrylate d'un alkylène glycol est un monométhacrylate d'éthylène glycol, de propylène glycol, de diéthylène glycol, de tétraéthylène glycol, ou d'un polyéthylène glycol [$HO(CH_2CH_2O)_nH$, n=5 à 20].

3. Lentille de contact souple suivant la revendication 1 ou 2, dans laquelle l'acide carboxylique insaturé ayant un ou plusieurs groupes carboxyliques dans sa molécule est choisi parmi l'acide acrylique, l'acide méthacrylique et l'acide itaconique.

4. Lentille de contact souple suivant l'une quelconque des revendications 1 à 3, dans laquelle le monométhacrylate d'un polyalcool ayant trois groupes hydroxyle ou davantage est le méthacrylate de glycéryle ou le monométhacrylate de pentaérythritol.

5. Lentille de contact souple suivant l'une quelconque des revendications 1 à 4, dans laquelle le méthacrylate d'alkyle est choisi parmi les esters méthylique, éthylique, n-propylique et n-butylique de l'acide méthacrylique.

6. Lentille de contact souple suivant l'une quelconque des revendications 1 à 5, dans laquelle l'acide carboxylique insaturé ayant un ou plusieurs groupes carboxyle dans sa molécule est utilisé dans une proportion de 10% en poids ou moins.

7. Lentille de contact souple suivant l'une quelconque des revendications 1 à 6, dans laquelle le monométhacrylate d'un polyalcool ayant trois groupes hydroxyle ou davantage est utilisé dans une proportion de 30% en poids ou moins.

8. Lentille de contact souple suivant l'une quelconque des revendications 1 à 7, dans laquelle le méthacrylate d'alkyle est utilisé dans une proportion de 20% en poids ou moins.

9. Lentille de contact souple suivant l'une quelconque des revendications 1 à 8, dans laquelle l'ester méthacrylique fluoré est un ester alkylique fluoré dans lequel le groupe alkyle contient au moins un groupe terminal —$CF_3$.

10. Lentille de contact souple suivant l'une quelconque des revendications 1 à 9, dans laquelle l'ester méthacrylique fluoré ou un de ses esters est le méthacrylate de trifluoréthyle.

11. Lentille de contact souple suivant l'une quelconque des revendications 1 à 10, dans laquelle l'ester méthacrylique fluoré ou un de ses esters est le méthacrylate d'hexafluoroisopropyle.

12. Lentille de contact souple obtenue en soumettant à une polymérisation par coulée par un procédé d'élévation de la température continu et/ou par stades successifs, une composition telle que spécifiée dans l'une quelconque des revendications 1 à 11, en traitant mécaniquement et en polissant le polymère obtenu pour lui donner la forme d'une lentille puis en hydratant et en gonflant le polymère.

13. Lentille de contact souple suivant la revendication 12, dans laquelle on utilise un procédé d'élévation de température continu et/ou par stades successifs de 35 à 110°C.

14. Lentille de contact souple obtenue en soumettant à une polymérisation par coulée par un procédé d'élévation continu de la temperature de 35° à 110°C, une composition comprenant 50 à 95% en poids d'un monométhacrylate d'un alkylène glycol, 5 à 35% en poids de méthacrylate de trifluoréthyle et/ou de méthacrylate d'hexafluoroisopropyle et moins de 40% en poids d'un ou plusieurs composés choisis parmi un acide carboxylique insaturé ayant un ou plusieurs groupes carboxyle dans sa molécule, un monométhacrylate d'un polyalcool ayant trois groupes hydroxyle ou davantage, et un méthacrylate d'alkyle; à traiter mécaniquement et à polir le polymère obtenu pour lui donner la forme d'une lentille; puis à hydrater et à faire gonfler le polymère.